Europäisches Patentamt

European Patent Office

Office européen des brevets

(19)

(11) Veröffentlichungsnummer : **0 091 531**
**B1**

(12) **EUROPÄISCHE PATENTSCHRIFT**

(45) Veröffentlichungstag der Patentschrift :
22.01.86

(51) Int. Cl.⁴ : **F 16 L   1/04**, E 02 D  29/06,
E 02 D  15/06

(21) Anmeldenummer : 82810156.8

(22) Anmeldetag : 08.04.82

(54) **Verfahren und Vorrichtung zum Auslegen einer Abdeckung Über einer unter Wasser liegenden Struktur oder einem unter Wasser liegenden Bodenstreifen.**

(43) Veröffentlichungstag der Anmeldung :
19.10.83 Patentblatt 83/42

(45) Bekanntmachung des Hinweises auf die Patenterteilung : 22.01.86 Patentblatt 86/04

(84) Benannte Vertragsstaaten :
BE DE FR GB IT NL SE

(56) Entgegenhaltungen :
FR-A- 2 458 631
US-A- 3 779 027
US-A- 3 793 845
Die Akte enthält technische Angaben, die nach dem
Eingang der Anmeldung eingereicht wurden und die
nicht in dieser Patentschrift enthalten sind.

(73) Patentinhaber : **Losinger AG**
**Könizstrasse 74**
**CH-3008 Bern (CH)**

(72) Erfinder : **Leuenberger, Hermann**
**Zelgstrasse 35**
**CH-3612 Steffisburg (CH)**

(74) Vertreter : **Velgo, Miroslav et al**
**Bovard AG Patentanwälte VSP Optingenstrasse 16**
**CH-3000 Bern 25 (CH)**

## Beschreibung

Die Erfindung geht aus von einem Verfahren zum Auslegen einer Abdeckung über einer unter Wasser verlegten Struktur oder einem unter Wasser liegenden Bodenstreifen, wobei die Abdeckung so gebildet wird, dass in eine unmittelbar über der Struktur bzw. dem Bodenstreifen liegende flexible Hülle Füllgut von einem Ueberwasserfahrzeug aus unter Druck kontrollierbar eingeführt wird.

In der britischen Patentschrift Nr. 1 585 170 ist ein Verfahren zur Bildung von Betonstrukturen für Unterwasserrohrleitungen beschrieben. Eine flexible Hülle in Form einer Tüte von einer Länge von etwa 4,5 m ünd einer Breite von etwa 3,5 m wird unter oder über die am Meeresboden verlegte Rohrleitung gelegt. Mittels eines flexiblen Verpressrohres, dessen eines Ende mit einer Betonvorbereitungsanlage an einem Ueberwasserfahrzeug und das andere Ende an einer Sammelleitung der Tüte befestigt ist, wird in die Tüte flüssiger Beton unter Druck kontrollierbar hineingeführt. Die mit flüssigem Beton gefüllte Tüte erhält eine geschwollene Form, die sich der runden Oberfläche der Rohrleitung anpasst, wonach sich der Beton setzt.

In diesem Verfahren können durch einzelne Tüten die Rohrleitungen nicht lückenlos abgedeckt und somit nicht ausreichend geschützt werden. Durch Wasserströmungen, durch Lichten von fallengelassenen Ankern usw. können die einzelnen Tüten abgewälzt werden, wodurch die Rohrleitung blossgelegt wird.

Dieser Nachteil sollte durch das Verfahren zum Schaffen einer Schutzeinrichtung für am Meeresboden liegende Strukturen, insbesondere Rohrleitungen, nach der DE-A-2 814 381 beseitigt werden. Das Ueberwasserfahrzeug ist hier mit einer Vorrichtung zur Bildung eines Betonbandes ausgerüstet. Das Betonband wird zum Meeresboden hinabgeführt und über die im voraus ausgelegte Rohrleitung gelegt. Das Betonband, das auch Bewehrungsnetze umfasst, ist von einem Tuch oder einer Folie umhüllt. Das vom Ueberwasserfahrzeug ablaufende Band erstreckt sich schräg durch das Wasser hinab zur Rohrleitung, nach der es sich fügt. Auf diese Weise entsteht über der Rohrleitung eine gleichmässig abgerundete, ununterbrochen verlaufende Betonschale.

In diesem Verfahren wird das Betonband vom Ueberwasserfahrzeug über der Rohrleitung kontinuierlich ausgelegt, während der Beton noch plastisch ist. Beim Auslegen des Betonbandes kann aber dieses, insbesondere bei grösseren Tiefen, nicht genau über der Rohrleitung ausgelegt werden ; es kann beim ungenauen Auslegen auch von der Rohrleitung abrutschen. Um dies zu verhindern, muss das Auslegen von Tauchern ununterbrochen überwacht werden, was mit erheblichen Kosten verbunden ist.

In der deutschen Offlegungsschrift 2 922 410 ist ein Verfahren zum Einbetten eines sich am Gewässergrund befindlichen Kabels beschrieben. Zu diesem Zweck wird ein auf dem Gewässergrund bewegbares, insbesondere fahrbares, Einbettungsfahrzeug verwendet, das eine mit dem einzubettenden Kabel in Führungsbeziehung stehende Leiteinrichtung enthält. Das Einbettungsfahrzeug ist mittels eines Zugseiles von einem zugeordneten Begleitschiff gezogen.

Mittels dieses Einbettungsfahrzeuges wird aber das auf den Gewässergrund verlegte Kabel nicht mit einer stabilen Abdeckung überdeckt.

In der US-A-3 779 027 ist ein Verfahren zum Auslegen einer Abdeckung über einer unterseeischen Rohrleitung beschrieben. Aus seiner Vorratseinrichtung wird eine Materialbahn abgeführt, und durch Zusammenführen ihrer Längsränder zu einer im Querschnitt geschlossenen Form umgebildet. Diese Verfahrensschritte werden am Begleitboot, also über Wasser durchgeführt. Die Hülle wird dann auf die am Meeresboden verlegte Rohrleitung herabgelassen und über ein in die Hülle eingeführtes Verpressrohr mit Füllgut gefüllt. Das Einlaufende des Verpressrohres steht in Verbindung mit dem Begleitboot. Dabei nimmt die Hülle im Querschnitt eine zweilappige Hantelform ein, die auf der Rohrleitung rittlings aufgesetzt ist.

Die in diesem Verfahren hergestellte zweilappige Hantelform der Abdeckung ist aber in dem Sinne nachteilig, dass sowohl die Krone der Abdeckung ohne Füllgut als auch der Scheitel der Rohrleitung, der nur mit der Materialbahn ohne Füllgut überdeckt ist, leicht beschädigt werden können. Darüberhinaus muss der Auslegungsablauf durch Taucher überwacht werden.

Der in Patentanspruch 1 angegebenen Erfindung liegt die Aufgabe zu Grunde, ein Verfahren zum Auslegen einer Abdeckung über einer unter Wasser verlegten Struktur oder über einem unter Wasser liegenden Bodenstreifen vorzuschlagen und eine Vorrichtung zum Ausführen des Verfahrens zu schaffen, welches Verfahren präzis, ohne Zeitverlust und ohne Ueberwachung des Auslegungsablaufes durch die Taucher ausgeführt werden kann. Auch die Bordarbeiten am Ueberwasserfahrzeug sollen wesentlich erleichtert und das Personal auf dem Ueberwasserfahrzeug herabgesetzt werden. Durch die Art der ausgelegten, sich an die Form der Struktur anpassenden Abdeckung soll ein dauerhafter Schutz gegen mechanische Beschädigung sowohl der Struktur bzw. des Bodenstreifens als auch der Abdeckung selbst erzielt werden.

Die lösung dieser Aufgaben wird durch die Merkmale der Kennzeichnung des Patentanspruches 1 und der Kennzeichnung des Patentanspruches 5 erreicht.

Die Vorrichtung kann einen in Fahrtrichtung des Fahrgestelles .vorderen Schieber zum Oeffnen eines entlang der gesamten Länge der Hülle verlaufenden Reissverschlusses und einen hinteren Schieber zum Schliessen des Reissverschlusses aufweisen. Die beiden Schieber sind voneinander in einem solchen Abstand am Fahrgestell befestigt, der der Länge der Oeffnung in der Hülle entspricht.

Mit Vorteil wird die Hülle mit Füllgut an dem der Struktur bzw. dem Bodenstreifen zugekehrten Ende des Tisches geformt. Zu diesem Zweck werden vorteilhaft zwei seitlich am Ablaufteil des Tisches befestigte Flügel verwendet, welche Flügel hydraulisch oder pneumatisch allseitig ausschwenkbar sind.

Die Erfindung wird nachstehend anhand der Zeichnungen beispielsweise näher erläutert. Es zeigen

Figur 1 eine perspektivische Ansicht der erfindungsgemässen Vorrichtung, die von einem Ueberwasserfahrzeug am Gewässergrund über einer Struktur geschleppt wird,

Figur 2 einen Längsschnitt der am Gewässergrund über einer Struktur liegenden Vorrichtung nach der Fig. 1,

Figur 3 eine Draufsicht auf die Vorrichtung nach der Fig. 2, jedoch ohne beide Schieber des Reissverschlusses,

Figur 4 eine Ansicht der Vorrichtung nach der Fig. 2 in Richtung des Pfeiles B,

Figur 5 eine Teilansicht der Vorrichtung mit einer Vorratseinrichtung der Hülle in Form eines Behälters, der teilweise im Schnitt dargestellt ist,

Figur 6 eine Teilansicht im Schnitt der Oeffnung in der Hülle und der Befestigung des Auslaufendes des Verpressrohres,

Figur 7 eine Teildraufsicht auf die Hülle nach der Fig. 6,

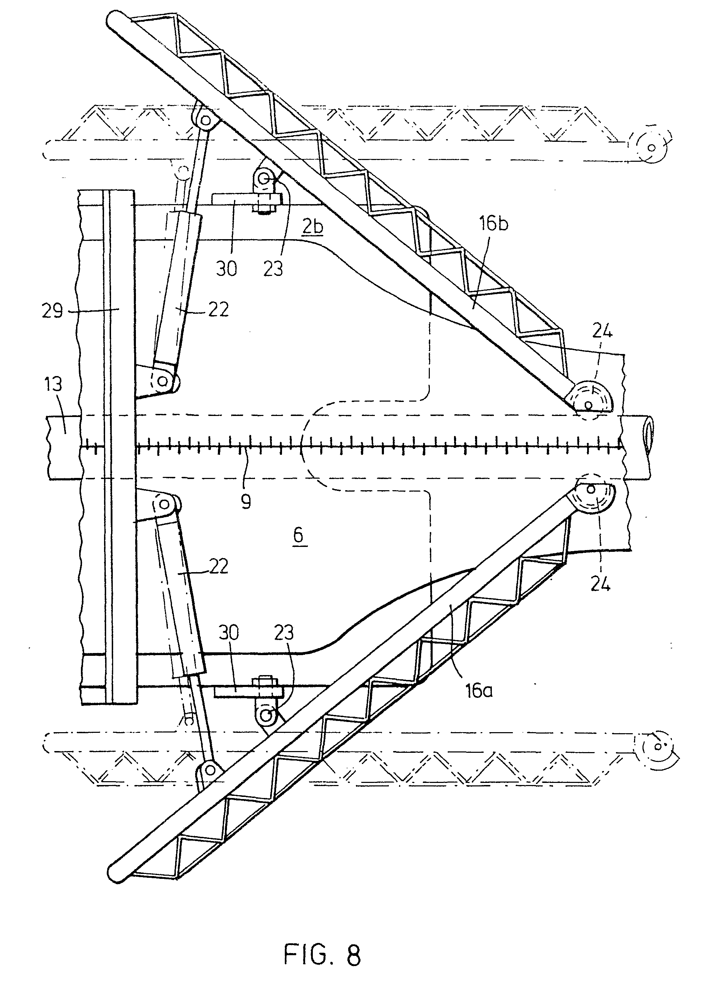

Figur 8 eine Draufsicht auf den Ablaufteil des Tisches mit an ihm schwenkbar angeordneten Flügeln,

Figur 9 eine Ansicht des Tischablaufteiles nach der Fig. 8,

Figur 10 ein Querschnitt durch die Rohrleitung mit ausgelegter Abdeckung, die unter die Struktur reicht.

Figur 11 einen Teillängsschnitt einer am Gewässergrund über einer Struktur liegenden Ausführungsform mit einem im Querschnitt S-förmigen Führungsstück für die Längsränder der Materialbahn und einem Hefter zum Zusammenheften derselben,

Figur 12 eine Draufsicht im Schnitt entlang der Linie XII-XII der Fig. 11,

Figur 13 eine Draufsicht auf eine noch weitere Ausführungsform, bei welcher die Materialbahn zu einer Oeffnung geöffnet wird,

Figur 14 einen Teilschnitt entlang der Linie XIV-XIV der Fig. 12, in welchem die Verstärkungswülste der Längsränder der Materialbahn rinnenförmig ausgebildet sind,

Figur 15 einen ähnlichen Schnitt wie in Fig. 14, wobei die Verstärkungswülste flach ausgebildet sind,

Figur 16 einen Schnitt entlang der Linie XVI-XVI der Fig. 12,

Figur 17 einen Schnitt entlang der Linie XVII-XVII der Fig. 12,

Figur 18 eine Teilansicht im Schnitt der Oeffnung in der Hülle, und der Befestigung des Auslaufendes des Verpressrohres und

Figur 19 eine Teildraufsicht auf die Hülle nach der Fig. 18.

Um eine am Meeres-, See-, Fluss- oder Kanalboden verlegte Struktur, wie Oel- oder Gasleitung oder elektrische oder telefonische Kabel, vor dem Ausspülen durch Wasserströme oder Beschädigung z. B. durch Wracks, Schiffanker oder Fischernetze zu schützen, wird über dieselbe eine Abdeckung ausgelegt.

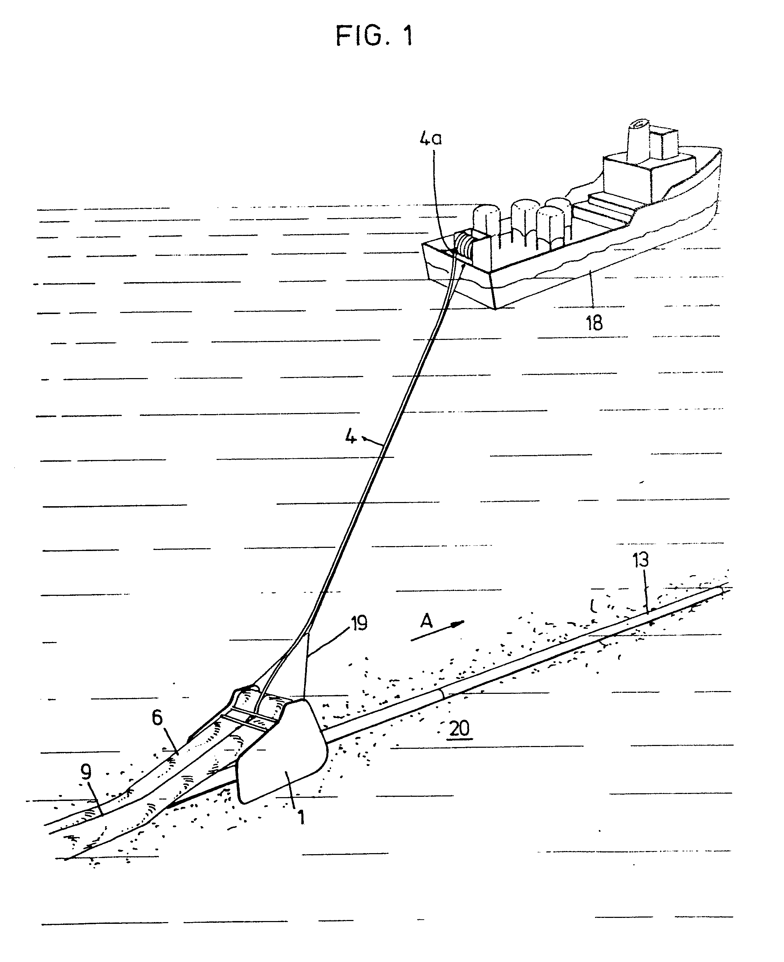

Die dazu dienende, in den Figuren 1 bis 7 dargestellte Ausführungsform der Vorrichtung wird von einem Ueberwasserfahrzeug 18 an einem Schleppseil 19 in Richtung des Pfeiles A geschleppt und ferngesteuert. Die Vorrichtung umfasst ein Fahrgestell 1, das unmittelbar über der unter Wasser verlegten Struktur 13, bewegbar ist. Das Fahrgestell 1 enthält zwei Seitenwände 17a, 17b die miteinander durch Querstreben 15 verbunden und mit Kufen 12 versehen sind, die auf dem Gewässergrund 20 gleiten. Die Querstreben 15 verlaufen oberhalb der Struktur 13.

Anstelle der Struktur 13 kann mittels der Vorrichtung auch ein unter Wasser liegender Bodenstreifen mit Abdeckung überdeckt werden. Es ist auch denkbar, dass das Fahrgestell 1, anstatt von einem Ueberwasserfahrzeug an einem Schleppseil geschleppt zu werden, mit Selbstantrieb ausgerüstet wird.

Zwischen den zwei voneinander entfernt angeordneten Seitenwänden 17a, 17b ist um eine horizontale Achse X eine Haspel 3 drehbar angeordnet. Auf der Haspel 3 ist eine Hülle 6 in Form eines länglichen, flach gefalteten Schlauches aufgewickelt. Die Haspel 3 ist in den Seitenwänden des Fahrgestelles 1 abnehmbar angeordnet; sie weist Flanschen 25 auf, die in Lagerungen 14 laufen.

In der Fahrtrichtung des Fahrgestelles 1 ist hinter der Haspel 3 in demselben ein Verlegetisch 2 untergebracht, der sich von der Haspel 3 bis zu der Struktur 13 nach unten geneigt erstreckt. Der Tisch 2 ist in den beiden Seitenwänden 17a, 17b des Fahrgestelles 1 befestigt. Der Tisch 2 besteht aus zwei Teilen, einem Verlegeteil 2a und einem einerseits mit dem Verlegeteil 2a gelenkig verbundenen und andererseits auf der Struktur 13 bzw. dem Bodenstreifen aufliegenden Ablaufteil 2b. Der Neigungswinkel des Tisches 2 zu dem Gewässergrund 20 beträgt etwa 30 Grad.

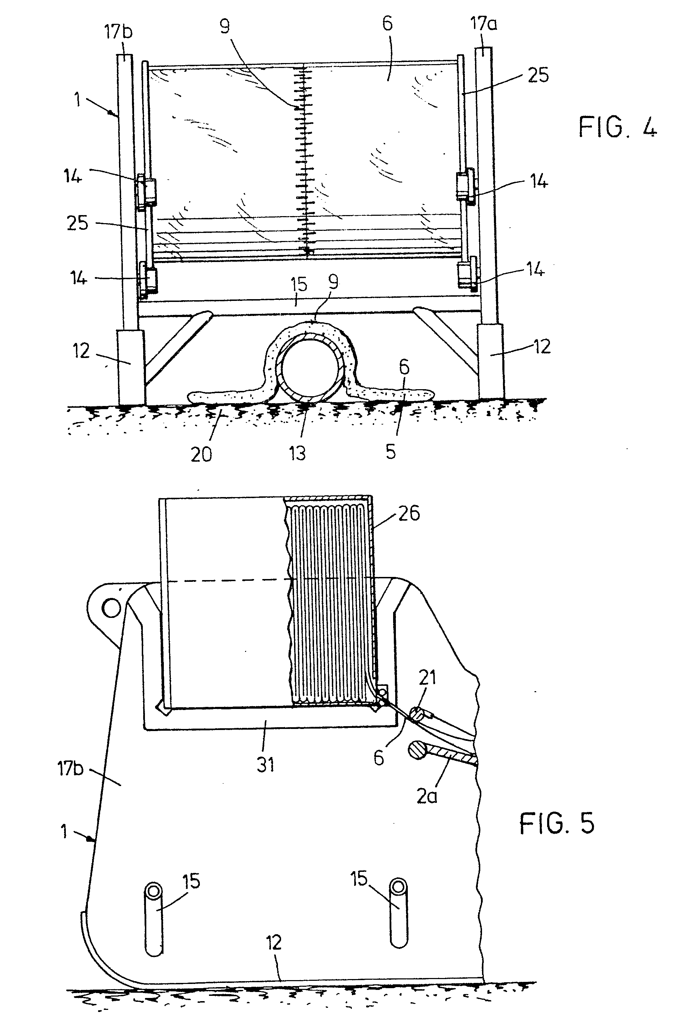

Die Haspel 3 kann durch einen in einen Halterahmen 31 einsetzbaren Behälter 26 ersetzt werden, in welchem die flachgelegte Hülle in aneinander anliegenden Falten untergebracht ist (siehe Fig. 5).

Die Hülle 6 ist entlang ihrer gesamten Länge mit einem Reissverschluss 9 versehen. Der in Fahrtrichtung des Fahrgestelles 1 vordere Schieber 7 des Reissverschlusses 9 ist an einem in Fahrtrichtung vor dem vorderen Schieber 7 liegenden Querrohr 21 befestigt, wogegen der in Fahrtrichtung des Fahrgestelles 1 hintere Schieber 8 des Reissverschlusses 9 an einer in Fahrtrichtung vor dem hinteren Schieber 8 liegenden Querleiste 11 mit Schiffchen 11a befestigt ist. Das Querrohr 21 sowie die Querleiste 11 sind an den beiden Seitenwänden 17a, 17b des Fahrgestelles 1 befestigt. Mit 28 ist eine unter den Schiebern 7, 8 angeordnete Platte bezeichnet.

Durch die Querleiste 11 ist das aus einem Metallrohr bestehende Auslaufende 4b eines aus biegsamem Material bestehende Verpressrohres 4 für plastischen Beton 5 durchgeführt. Das Einlaufende 4a des Verpressrohres 4 steht mit dem Ueberwasserfahrzeug 18 in Verbindung. Auf dem Ueberwasserfahrzeug 18 ist eine nicht dargestellte Zementvorbereitungsanlage vorgesehen, aus welcher plastischer Beton in das vom Ueberwasserfahrzeug 18 durch das Wasser zu dem Fahrgestell 1 verlaufende Verpressrohr 4 unter Druck eingeführt wird.

Durch die Schieber 7, 8 wird die Hülle 6 während ihrer Abwicklung von der Haspel 3 entlang ihrer gesamten Länge ununterbrochen geöffnet und wieder geschlossen. Somit bildet sich in der Hülle 6 eine in ihrer Gestaltung gleichbleibende Oeffnung 10, weil der Abstand des vorderen 7 und des hinteren 8 Schiebers voneinander immer der gleiche bleibt. Durch die Oeffnung 10 ist das Auslaufende 4b des Verpressrohres 4 durchgeführt und mündet im Innenraum der Hülle 6. Der plastische Beton 5 wird von dem Ueberwasserfahrzeug 18 über das Verpressrohr 4 in die Hülle kontrollierbar injiziert.

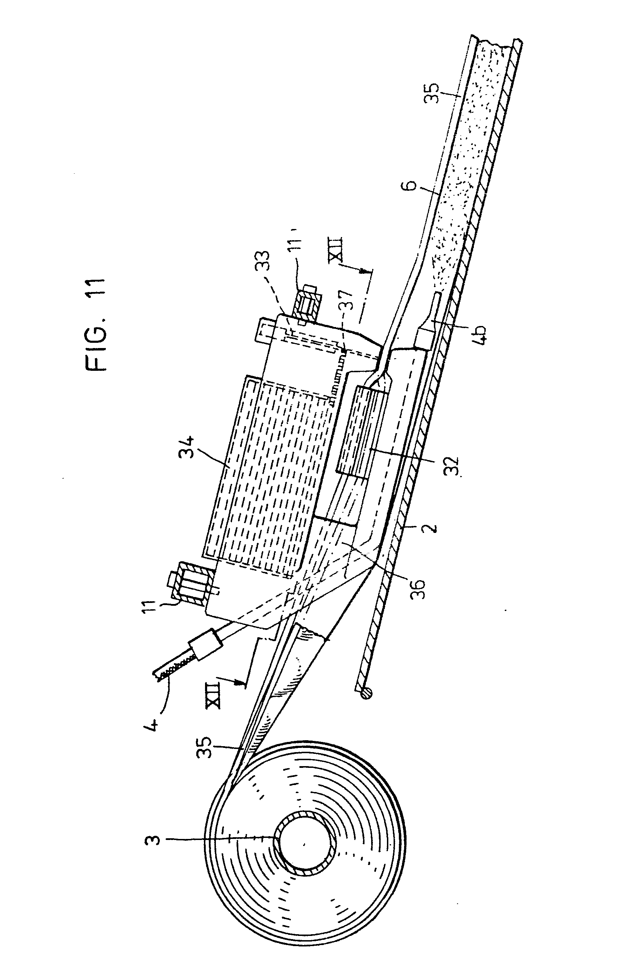

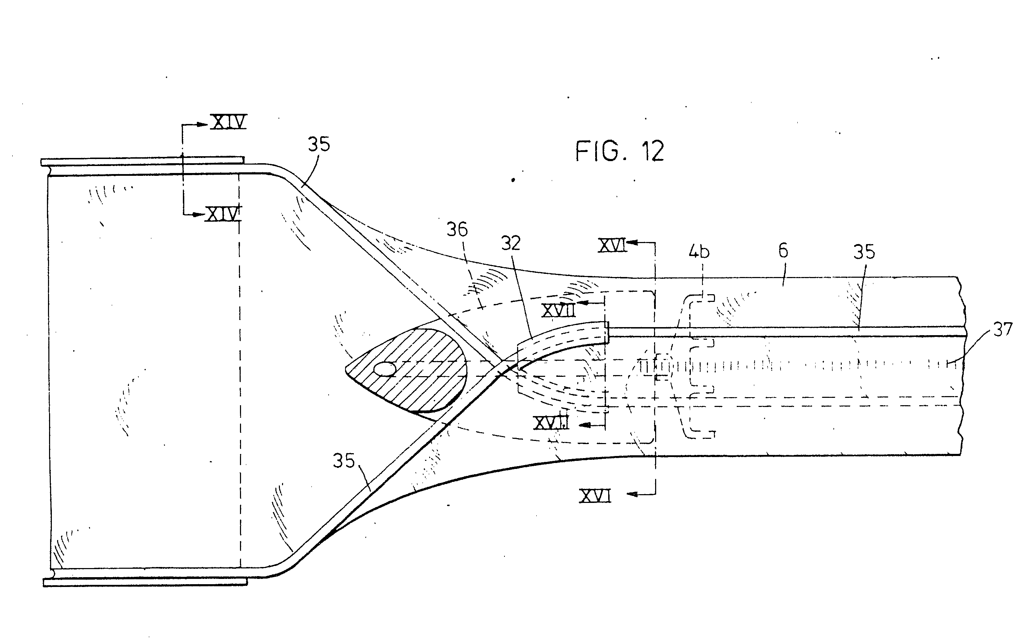

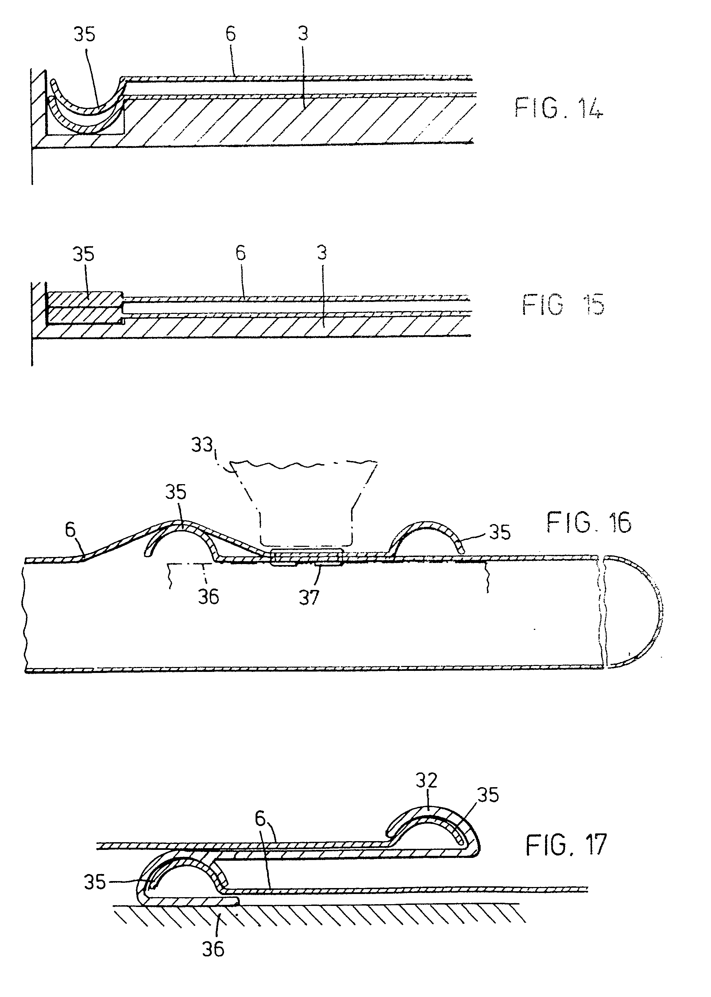

Bei der in den Fig. 11 und 12 dargestellten Ausführungsform der Vorrichtung ist anstelle der Hülle 6 auf der Haspel 3 eine Materialbahn in Flachform aufgewickelt. Zu diesem Zweck muss die Breite der Haspel 3 etwa zweimal so gross wie diejenige der Haspel 3 nach der in den Fig. 1 bis 7 dargestellten Ausführungsform sein. Die Längsränder der Materialbahn 6 sind als rinnenförmige Verstärkungswülste 35 (siehe Fig. 14) oder als flache Verstärkungswülste 35 (siehe Fig. 15) ausgebildet. Es sind auch andere Formen dieser Verstärkungswülste, wie V-Form, vorstellbar.

Wie aus der Fig. 12 ersichtlich ist, wird bei dieser Ausführungsform keine Oeffnung in der Hülle gebildet. Die Längsränder der Materialbahn 6 werden während der Abwicklung der Materialbahn durch ein im Querschnitt S-förmiges Führungsstück 32, das an einer Unterlage 36, die ihrerseits am Fahrgestell 1 festgehalten ist, befestigt ist, so zusammengeführt, dass die Längsränder übereinander gelangen, wonach sie zusammengebunden werden. Bei dieser Ausführungsform mündet das Auslaufende 4b des Verpressrohres 4 erst in die im Querschnitt durch zusammen verbundene Längsränder entstandenen geschlossenen Form (Hülle) der Materialbahn.

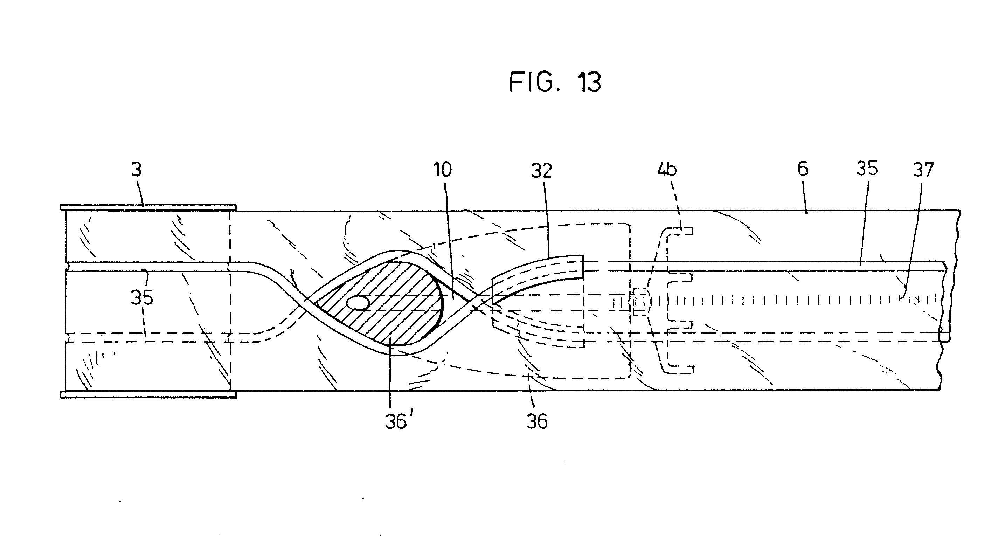

Bei der Ausführungsform nach der Fig. 13 ist die Materialbahn auf der Haspel 3 so aufgewickelt, dass ihre Längsränder teilweise übereinander gefaltet sind. Diese Längsränder können auch miteinander lösbar verbunden werden. Bei der Abwicklung der Materialbahn werden die Längsränder derselben um einen Oeffnungsteil 36' der Unterlage 36 geführt, wodurch in der Materialbahn 6 eine in ihrer Gestaltung gleichbleibende Oeffnung 10 entsteht. Dann werden die Längsränder der Materialbahn wieder mittels des im Querschnitt S-förmigen Führungsstückes 32 so zusammen geführt, dass sie übereinander liegen und zusammen verbunden werden, um eine im Querschnitt geschlossene Form zu bilden. Das Verpressrohr 4 für den plastischen Beton 5 ist durch den Oeffnungsteil 36' der Unterlage 36 und die Oeffnung 10 hindurchgeführt, wobei sein Auslaufende 4b im Innenraum der Hülle 6 mündet.

Um die Längsränder der Materialbahn bei den Ausführungsformen nach den Fig. 12 und 13 fest zusammen zu verbinden, ist an der Unterlage 36 ein Hefter 33 mit einem Klammermagazin 34 vorgesehen. Durch die hydraulische oder pneumatische Betätigung des Hefters 33 werden die übereinander liegenden Längsränder der Materialbahn mittels der Klammer zu einer Hülle zusammengeheftet. Wie die Längsränder der Materialbahn durch die Klammern 37 fest verbunden werden, ist aus der Fig. 16 sichtbar. In der Fig. 17 ist das im Querschnitt S-förmige Führungsstück 32 dargestellt, das für beide Ausführungsformen nach den Fig. 12 und 13 bestimmt ist.

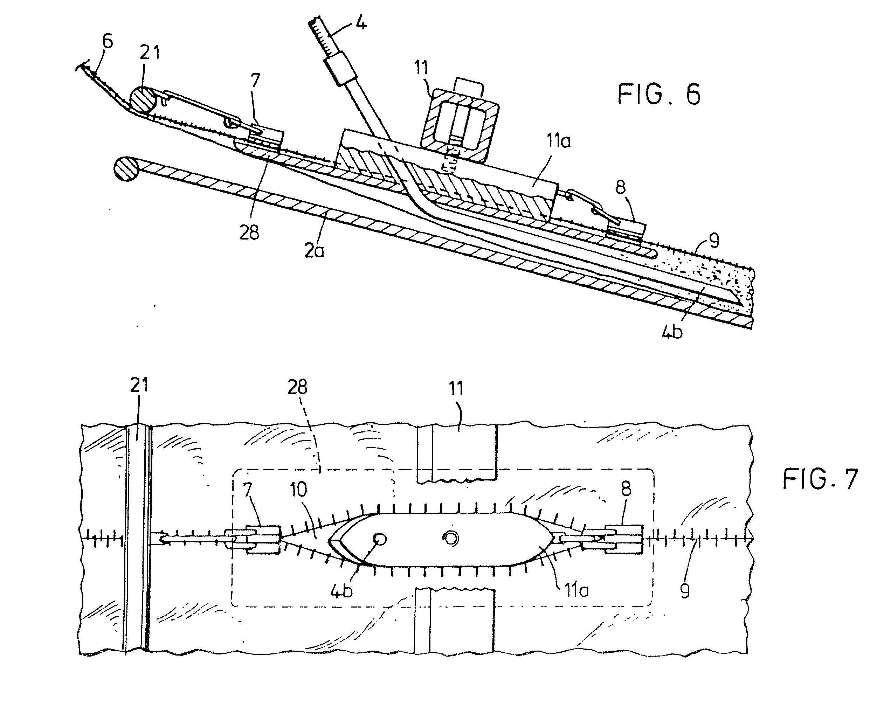

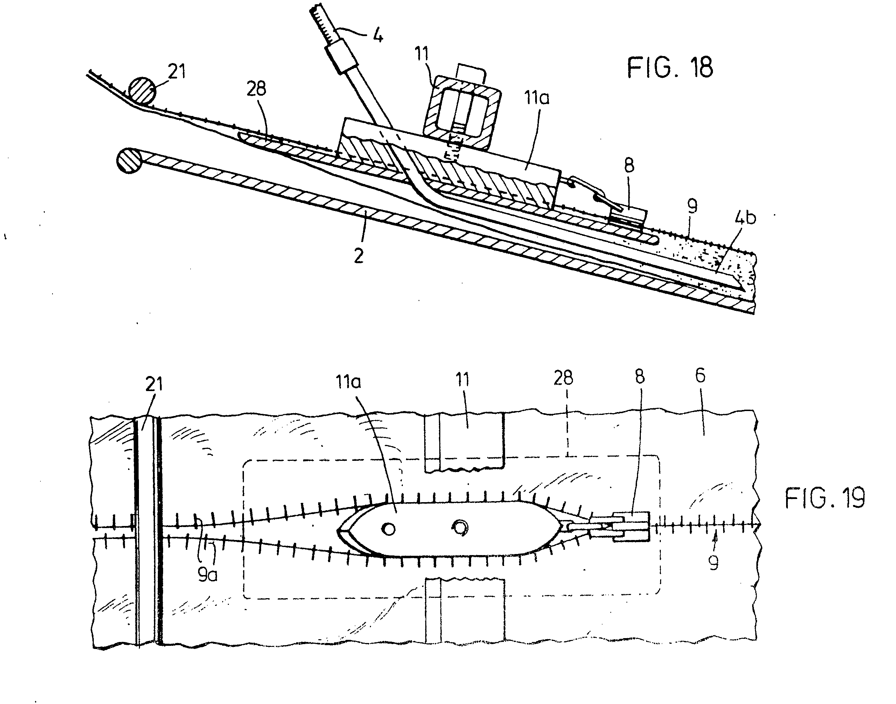

Die Ausführungsform der Vorrichtung nach den Fig. 18 und 19 entspricht im Grunde der Ausführungsform nach den Fig. 6 und 7, mit der Ausnahme, dass der in Fahrtrichtung des Fahrgestelles 1 vordere Schieber 7 des Ressverschlusses 9 weggelassen wurde. Die Längsränder der auf der Haspel 3 aufgewickelten Materialbahn sind mit Reissverschlussreihen 9a versehen, die miteinander nicht verbunden sind. Während der Abwicklung der Materialbahn öffnen sich die beiden Längsränder voneinander, weil sie um das Schiffchen 11a der Querleiste 11 herumgeführt werden. Hinter dem Schiffchen 11a werden die beiden Reihen 9a des Reissverschlusses 9 mittels des Schiebers 8 verbunden, um eine im Querschnitt geschlossene Form der Hülle 6 zu bilden. In diesem Fall mündet das Auslaufende 4b des Verpressrohres 4 in der Fahrtrichtung des Fahrgestelles 1 hinter dem Schieber 8 im Innenraum der Hülle 6.

Durch die Bewegung des Fahrgestelles 1 in Fahrtrichtung (Pfeil A) und durch das Eigengewicht der mit plastischem Beton 5 gefüllten Hülle 6 gleitet die Hülle über die Teile 2a, 2b des Tisches 2. Dabei wird der plastische Beton 5 in der Hülle 6 auf dem Verlegeteil 2a des Tisches 2 gleichmässig ausgebreitet. Durch die Ausbreitung des plastischen Betons 5 auf dem Verlegeteil 2a entsteht eine gleichmässige Dicke der mit dem Beton 5 gefüllten Hülle 6.

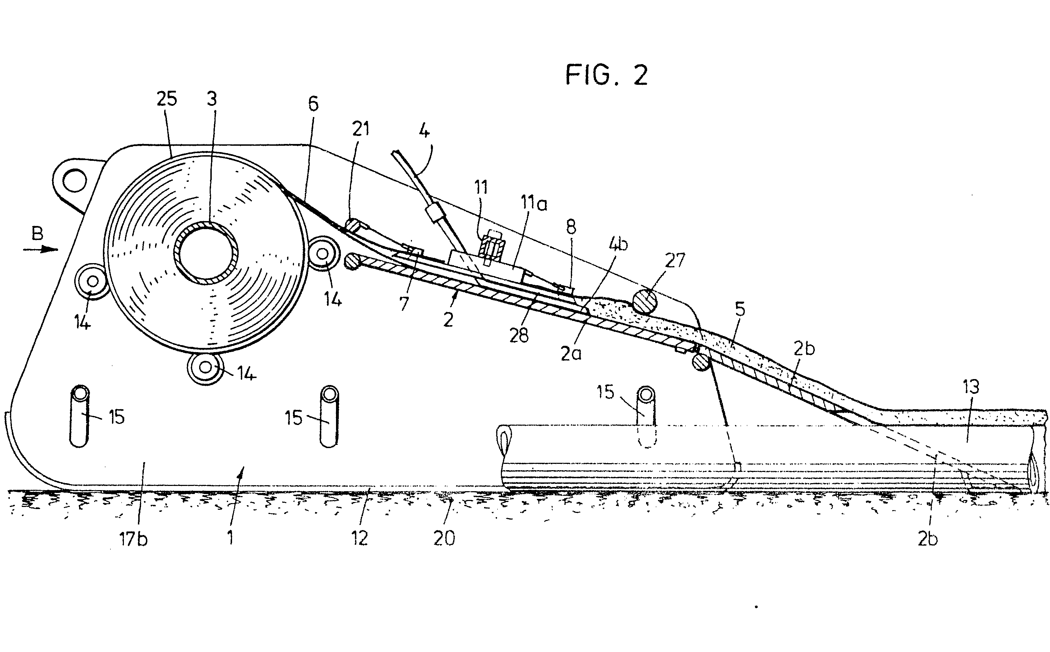

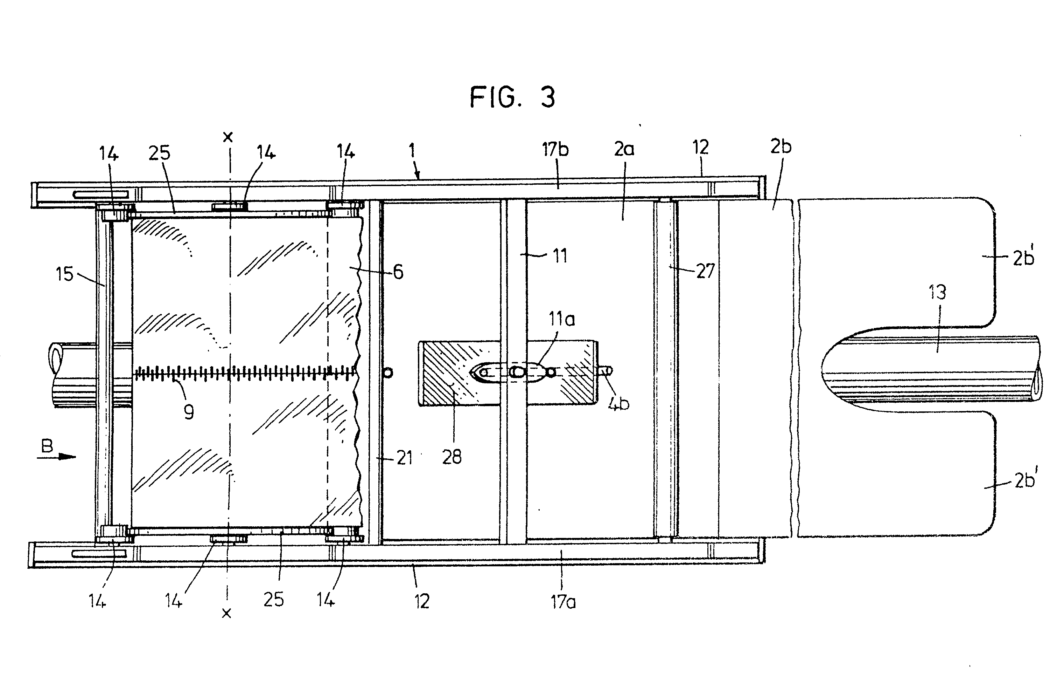

Die in die Hülle 6 eingeführte Menge des plastischen Betons 5 wird durch eine in den Figuren 2 und 3 nur schematisch dargestellte Gummirolle 27 mit einem Melder der Dicke der Hülle 6 überwacht. Die mit Beton 5 gefüllte Hülle 6 rutscht dann weiter über den Ablaufteil 2b des Tisches 2 in Richtung der Rohrleitung 13 bzw. des Bodenstreifens und legt sich kontinuierlich über dieselben. Durch die gelenkige Verbindung des Ablaufteiles 2b mit dem Verlegeteil 2a des Tisches 2 wird erreicht, dass sich der Ablaufteil 2b, dessen Auslaufteile 2b' über dem Wassergrund gleiten, an die Unebenheiten des Wassergrundes 20 anpassen kann. Desweiteren sichert der Ablaufteil 2b ein gleichmässiges Auslegen der Hülle 6 mit Beton 5 über der Rohrleitung 13 auch dann, wenn das Fahrgestell 1 nicht vollständig zentriert ist.

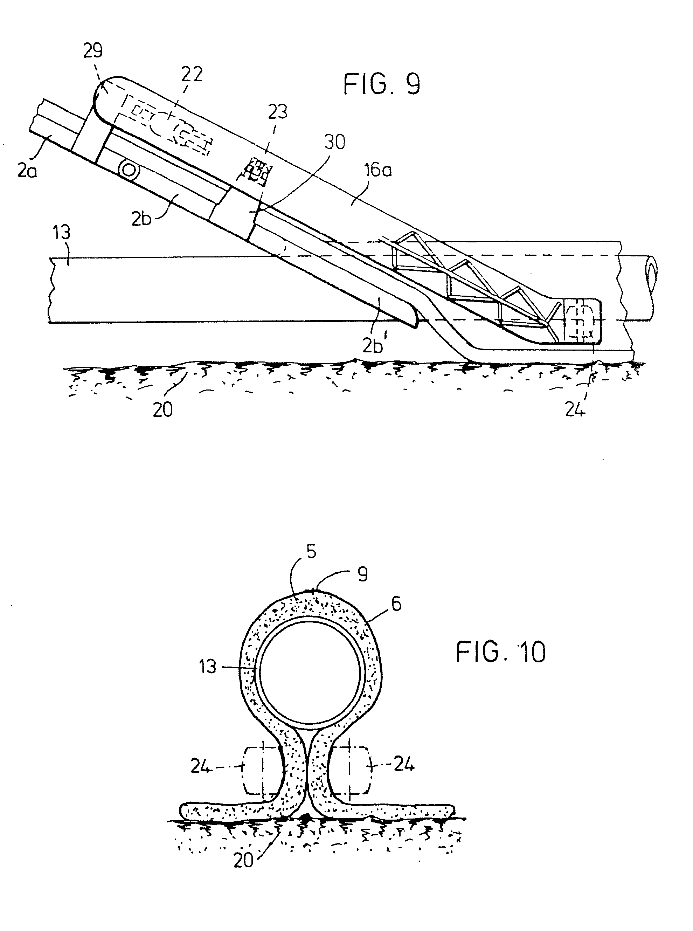

Wenn die Rohrleitung 13 vom Grundwasserboden 20 absteht und beabsichtig ist, dass die Hülle 6 mit Beton 5 auch mindestens teilweise unter die Rohrleitung 13 ausgelegt wird, wird die Hülle 6 mit Beton 5 an dem der Rohrleitung 13 bzw. dem Bodenstreifen zugekehrten Ende des Ablaufteiles 2b des Tisches 2 geformt. Zu diesem Zweck sind seitlich am Ablaufteil 2b zwei Flügel 16a, 16b vorgesehen, die mittels hydraulischer oder pneumatischer Kolbenzylinder 22 allseitig auschwenkbar sind. Die Flügel sind in an Supporten 30 befestigten Lagern 23 gelagert. Die Flügel 16a, 16b sind materiel verstärkt und an ihren Enden, durch welche die Hülle 6 mit Füllgut 5 betätigt wird, mit Rollen 24 mit Gummiüberzug versehen. Durch das Anpressen der Rollen 24 auf die Hülle 6 mit Beton 5 wird eine Gestaltung der Hülle erreicht, die in der Figur 9 sichtbar ist. Die Kolbenzylinder 22 sind schwenkbar an einem Träger 29 angeordnet, der von aussen am Ablaufteil 2b befestigt ist und als Brücke im Abstand vom Ablaufteil 2b und quer zu seiner Längsachse verläuft.

Die flach gefaltete Materialbahn oder Hülle 6 hat eine Durchschnittslänge von 500 m und eine Breite bis zu 10 m. Die mit plastischem Beton 5 gefüllte Hülle 6 hat eine Dicke von etwa 10 cm. Beim Auslaufen der aufgespeicherten, flachgelegten Hülle 6 wird die Hapsel 3 bzw. der Behälter 26 mittels eines nicht dargestellten Kranes vom Fahrgestell 1 abgenommen und eine neue Haspel oder Behälter mit der aufgewickelten oder aufgespeicherten Hülle in das Fahrgestell 1 eingesetzt. Dann müssen die Schieber 7, 8 in den Reissverschluss 9 nach einem teilweisen Abwickeln oder Abführen der flach gefalteten Hülle 6 eingefädelt werden. Diese Arbeiten sowie das Einführen der Längsränder in das im Querschnitt S-förmige Führungsstück 32 müssen natürlich von Tauchern durchgeführt werden. Um das genaue Auslegen der Abdeckung vom Ueberwasserfahrzeug 18 kontrollieren zu können, kann die Vorrichtung mittels einer Fernsehkamera überwacht werden.

Durch die obenbeschriebene Vorrichtung kann über der am Wassergrund verlegten Rohrleitung bzw. unter dem Wasser liegenden Bodenstreifen eine Abdeckung präzis und ohne Zeitverlust ausgelegt werden. Die Betriebskosten einer solchen Vorrichtung sind wesentlich niedriger als bei allen bekannten Vorrichtungen dieser Art. Die 500 m lange Hülle kann als Abdeckung in 24 Stunden ausgelegt werden. An Stelle eines Reissverschlusses mit zwei Schiebern kann eine Trenn- und Verschweissvorrichtung verwendet werden.

**Patentansprüche**

1. Verfahren zum Auslegen einer Abdeckung über einer unter Wasser verlegten Struktur oder einem unter Wasser liegenden Bodenstreifen, wobei die Abdeckung so gebildet wird, dass in eine unmittelbar über der Struktur (13) bzw. dem Bodenstreifen liegende flexible Hülle (6) Füllgut (5) von einem Ueberwasserfahrzeug (18) aus unter Druck kontrollierbar eingeführt wird, dadurch gekennzeichnet, dass die zur Bildung der Hülle (6) dienende Materialbahn, die in einer mit einem direkt über der Struktur (13) bzw. dem Bodenstreifen bewegbaren, zum Gewässergrund (20) geneigten Verlegetisch (2) eines Fahrgestelles (1) in Verbindung stehenden Vorratseinrichtung aufgespeichert ist, aus der Vorratseinrichtung abgeführt, und entweder durch Zusammenführen ihrer Längsränder zu einer im Querschnitt geschlossenen Form gebildet und mit Füllgut (5) gefüllt wird, oder dass die in der Vorratseinrichtung aufgespeicherte Hülle (6) während ihrer Abführung entlang ihrer gesamten Länge ununterbrochen geöffnet und wieder geschlossen wird, so dass in der Hülle (6) eine in ihrer Gestaltung gleichbleibende Oeffnung (10) gebildet wird, durch welche in die Hülle (6) das Füllgut (5) gefüllt wird, wonach in beiden Fällen die mit dem Füllgut gefüllte Hülle unter Ausnutzung der Schwerkraft und der Bewegung des Verlegetisches (2) von demselben in Richtung der Struktur (13) bzw. des Bodenstreifens rutscht und sich über diese kontinuierlich legt.

2. Verfahren nach Anspruch 1, dadurch gekennzeichnet, dass die Längsränder der Materialbahn, um geschlossen zu werden, übereinander gelegt und miteinander fest verbunden werden.

3. Verfahren nach Anspruch 1, dadurch gekennzeichnet, dass zur Verbindung der Längsränder der Materialbahn ein Reissverschlus benützt wird.

4. Verfahren nach Anspruch 1, dadurch gekennzeichnet, dass die Form der über einer vom Grundwasserboden (20) abstehenden Rohrleitung (13) abgelegten Abdeckung durch zwei am Ende des Verlegetisches (2) befestigte Flügel (16a, 16b) von aussen beeinflusst wird.

5. Vorrichtung zur Ausführung des Verfahrens nach Anspruch 1, mit einem auf der unter Wasser verlegten Struktur (13) bewegbar aufgesetzten oder am Gewässergrund (20) bewegbaren, von einem Ueberwasserfahrzeug (18) ferngesteuerten Fahrgestell (1) und mit einem am Fahrgestell (1) befestigten Verpressrohr (4) für das Füllgut (5), dessen Auslaufende (4b) im Innenraum der Hülle (6) mündet, und dessen Einlaufende (4a) mit dem Ueberwasserfahrzeug (18) in Verbindung steht, dadurch gekennzeichnet, dass die Vorratseinrichtung (26; 3) am Fahrgestell (1) abnehmbar befestigt ist, dass der Verlegetisch (2) einen sich von der Vorratseinrichtung (3) in Richtung der Struktur (13) bzw. des Bodenstreifens nach unten erstreckenden Verlegeteil (2a) und einen einerseits mit dem Verlegeteil (2a) gelenkig verbundenen und andererseits auf der Struktur (13) bzw. dem Bodenstreifen aufliegenden Ablaufteil (2b) aufweist, über welche Teile (2a, 2b) die Hülle (6) mit Füllgut (5) rutscht, und dass zur Bildung einer im Querschnitt geschlossenen Form aus der Materialbahn oder zur Bildung einer gleichbleibenden Oeffnung (10) in der Hülle (6) am Fahrgestell (1) befestigte Mittel vorgesehen sind.

6. Vorrichtung nach Patentanspruch 5, dadurch gekennzeichnet, dass die am Fahrgestell (1) abnehmbar angeordnete Vorratseinrichtung (3) eine um eine horizontale Achse (x) drehbare Haspel mit aufgewickelter Hülle (6) und das Füllgut (5) Beton ist.

7. Vorrichtung nach Anspruch 6, dadurch gekennzeichnet, dass die Hülle (6) in Form eines länglichen, flach gefalteten Schlauches aufgewickelt ist.

8. Vorichtung nach Anspruch 5, dadurch gekennzeichnet, dass das Mittel zur Bildung einer im Querschnitt geschlossenen Form aus der Materialbahn ein im Querschnitt S-förmiges Führungsstück (32) zum Zusammenführen der Längsränder der Materialbahn und einen in Richtung der Bewegung des Fahrgestelles (1) hinter dem Führungsstück (32) angeordneten Hefter (33) umfasst, wobei das Führungsstück (32) und der Hefter (33) am Fahrgestell (1) befestigt sind.

9. Vorrichtung nach Anspruch 5, dadurch gekennzeichnet, dass das Mittel zur Bildung einer gleichbleibenden Oeffnung (10) in der Hülle (6) einen in Fahrtrichtung des Fahrgestelles (1) vorderen Schieber (7) zum Oeffnen des über die gesamte Länge der Hülle (6) verlaufenden Reissverschluses (9) und einen hinteren Schieber (8) zum Schliessen des Reissverschlusses (9) umfasst, wobei die beiden Schieber (7, 8) voneinander in einem Abstand am Fahrgestell (1) befestigt sind, der der Länge der Oeffnung (10) in der Hülle (6) entspricht.

10. Vorrichtung nach Anspruch 5, gekennzeichnet durch zwei seitlich am Ablaufteil (2b) des Tisches (2) befestigte Flügel (16a, 16b) zur Formbildung der Materialbahn mit Füllgut (5), welche Flügel (16a, 16b) allseitig ausschwenkbar sind.

## Claims

1. Process for laying a covering over a structure laid under water or a strip of ground lying under water, the covering being formed in that filling material (5) from a surface craft (18) is controllably introduced under pressure into a flexible casing (6) lying directly over the structure (13) or the strip of ground, characterized in that the web of material used for forming the casing (6), which web is stored in a storage facility communicating with a laying table (2) of a chassis (1), which table is movable directly over the structure (13) or the strip of ground and inclined towards the bottom of the body of water, is drawn off out of the storage facility and either is formed by bringing its longitudinal edges together into a shape closed in cross-section and is filled with filling material (5), or that the casing (6) stored in the storage facility is uninterruptedly opened and reclosed along its entire length while being drawn off so that an opening (10) remaining unchanged in its configuration is formed in the casing (6), through which opening the filling material (5) is fed into the casing (6), whereafter in both cases the casing filled with the filling material, taking advantage of the force of gravity and the movement of the laying table (2), slides from the latter in the direction of the structure (13) or the strip of ground and is continuously laid thereover.

2. Process according to claim 1, characterized in that the longitudinal edges of the web of material, in order to be closed, are laid one over the other and connected fast to one another.

3. Process according to claim 1, characterized in that for connecting the longitudinal edges of the web of material, a slides fastener is used.

4. Process according to claim 1, characterized in that the shape of the covering laid down over a pipeline (13) projecting from the underground water bottom (20) is influenced from outside by two wings (16a, 16b) secured to the end of the laying table (2).

5. Device for carrying out the process according to claim 1, having a chassis (1) movably placed upon the structure (13) laid under water or movable on the bottom of the body of water (20), remotely controlled from a surface craft (18), and having a pressure pipe (4) for the filling material (5) fastened to the chassis (1), the outlet end (4b) of which opens out in the interior of the casing (6), and the intake end of which communicates with the surface craft (18), characterized in that the storage facility (26 ; 3) is removably fastened to the chassis (1), that the laying table (2) has a laying portion (2a) extending downwards from the storage facility (3) in the direction of the structure (13) or the strip of ground and a launching portion (2b) jointedly connected to the laying portion (2a) on the one side and resting upon the structure (13) or the strip of ground on the other side, over which parts (2a, 2b) the casing (6) with filling material (5) slides, and that means are provided on the chassis (1) for forming a shape closed in cross-section from the web of material or for forming an unchanging opening (10) in the casing (6).

6. Device according to claim 5, characterized in that the storage facility (3) removably disposed on the chassis (1) is a reel rotatable about a horizontal axis (x) with wound-up casing (6), and the filling material (5) is concrete.

7. Device according to claim 6, characterized in that the casing (6) is wound up in the form of an elongated, flat-folded tube.

8. Device according to claim 5, characterized in that the means for forming a shape closed in cross-section from the web of material comprises a guide piece (32) of S-shaped cross-section for bringing together the longitudinal edges of the web of material, and a stapler (33) disposed behind the guide piece (32) in the direction of movement of the chassis (1), the guide piece (32) and the stapler (33) being fastened to the chassis (1).

9. Device according to claim 5, characterized in that the means for forming an unchanging opening (10) in the casing (6) comprises, relative to the direction of travel of the chassis (1), a front slide (7) for opening the slide fastener (9) running over the entire length of the casing (6) and a rear slide (8) for closing the slide fastener (9), the two slides (7, 8) being fastened on the chassis (1) at a distance from one another which corresponds to the length of the opening (10) in the casing (6).

10. Device according to claim 5, characterized by two wings (16a, 16b) fastened laterally to the launching portion (2b) of the table (2) for shaping of the web of material with filling material (5), which wings (16a, 16b) can be swung out to all slides.

**Revendications**

1. Procédé pour la mise en place d'une couverture sur une structure sous-marine ou sur une bande de terrain se trouvant sous eau, la couverture étant formée de manière telle qu'une masse de remplissage (5), provenant d'un véhicule (18) se trouvant sur l'eau, soit introduite sous pression et de façon contrôlée dans une gaine flexible (6) située immédiatement sur la structure (13) ou la bande de terrain, caractérisé en ce que le cheminat de matériau servant à former la gaine (6), qui est emmagasiné dans une réserve se trouvant en liaison avec une table de placement (2) d'un chariot (1) inclinée par rapport au fond sous-marin et qui se déplace directement au-dessus de la structure (13) ou de la bande de terrain, est déroulé à partir de la réserve, et, soit ce cheminat est formé en une forme de section fermée par rabattement de ses bords longitudinaux et rempli de masse de remplissage, soit la gaine (6) emmagasinée dans la réserve est, pendant son déroulement sur toute sa longueur sans interruption, ouverte puis refermée de façon qu'une ouverture (10) soit formée dans la gaine (6) en restant toujours semblable dans sa configuration, ouverture par laquelle la masse de remplissage (5) est introduite dans la gaine (6), sur quoi, dans les deux cas, la gaine remplie de masse de remplissage glisse et s'établit continuellement sur la structure (13) ou la bande de terrain, sous l'effet de la pesanteur et des mouvements de la table de placement (2) dans la direction de celle-ci vers la structure ou la bande de terrain.

2. Procédé selon la revendication 1, caractérisé en ce que les bords longitudinaux du cheminat de matériau sont, pour être fermés, disposés l'un au-dessus de l'autre et fermement reliés l'un à l'autre.

3. Procédé selon la revendication 1, caractérisé en ce qu'une fermeture éclair est utilisée pour la liaison des bords longitudinaux du cheminat de matériau.

4. Procédé selon la revendication 1, caractérisé en ce que la forme de la couverture déposée sur une conduite tubulaire (13) située à distance du fond sous-marin (20) est influencée de l'extérieur par deux ailes (16a, 16b) fixées à l'extrémité de la table de placement (2).

5. Dispositif pour la mise en œuvre du procédé selon la revendication 1, avec un châssis circulant (1) disposé de façon déplaçable sur la structure (13) déposée sous l'eau, ou déplaçable sur le fond sous-marin, lequel châssis est télécommandé depuis un véhicule (18) se trouvant sur l'eau, et avec, fixé au châssis circulant (1), un tube de compression (4) pour la masse de remplissage (5), dont l'extrémité de sortie (4b) débouche dans l'espace intérieur de la gaine (6) et dont l'extrémité d'entrée (4a) est en liaison avec le véhicule se trouvant sur l'eau (18), caractérisé en ce que le dispositif de réserve (26 ; 3) est fixé de façon amovible au châssis circulant (1), en ce que la table de placement (2) présente une partie de placement (2a) qui s'étend vers le bas à partir du dispositif de réserve (3) en direction de la structure (13) ou de la bande de terrain, et une partie de décharge (13b) qui, d'une part, est reliée de façon articulée avec la partie de placement (2a), et d'autre part repose sur la structure (13) ou la bande de terrain, la gaine (6) avec la masse de remplissage (15) glissant sur ces parties (2a, 2b) et en ce que, pour la formation d'une forme de section fermée en partant du cheminat de matériau, où pour la formation d'une ouverture (10) restant la même dans la gaine (6), sont prévus des moyens fixés au châssis circulant (1).

6. Dispositif selon la revendication 5, caractérisé en ce que le dispositif de réserve (3) disposé de façon amovible sur le châssis circulant (1) est un dévidoir tournant autour d'un axe horizontal (x) avec la gaine (6) bobinée sur lui, la masse de remplissage (5) étant du béton.

7. Dispositif selon la revendication 6, caractérisé en ce que la gaine (6) est bobinée sous la forme d'un tuyau replié à plat longitudinalement.

8. Dispositif selon la revendication 5, caractérisé en ce que le moyen pour la formation d'une forme de section fermée à partir du cheminat de matériau comprend une pièce de guidage (32) à section en forme de S pour la conduite conjuguée des bords longitudinaux du cheminat de matériau, et un brocheur (33) disposé derrière la pièce de guidage (32) dans la direction du mouvement du châssis circulant (1), la pièce de guidage (32) et le brocheur (33) étant fixées au châssis circulant (1).

9. Dispositif selon la revendication 5, caractérisé en ce que le moyen pour la formation dans la gaine (6) d'une ouverture (10) restant la même, comprend un curseur (7), de devant, dans la direction du châssis circulant (1), pour ouvrir la fermeture éclair (9) qui s'étend sur toute la longueur de la gaine (6), et un curseur arrière (8) pour fermer la fermeture éclair (9), les deux curseurs (7, 8) étant fixés au châssis circulant (1) à une distance qui correspond à la longueur de l'ouverture (10) dans la gaine (6).

10. Dispositif selon la revendication 5, caractérisé par deux ailes (16a, 16b) fixées latéralement à la partie de décharge (2b) de la table (2) pour établir la forme du cheminat de matériau avec la masse de remplissage, lesquelles ailes (16a, 16b) sont rabattables de tous les côtés.

## FIG. 1

FIG. 2

# FIG. 3

0 091 531

FIG. 4

FIG. 5

4

FIG. 6

FIG. 7

0 091 531

FIG. 8

FIG. 9

FIG. 10

FIG. 11

FIG. 12

0 091 531

# FIG. 13

0 091 531

FIG. 14

FIG. 15

FIG. 16

FIG. 17

FIG. 18

FIG. 19